(19) Europäisches Patentamt
European Patent Office
Office européen des brevets

(11) **EP 2 521 851 B1**

(12) **FASCICULE DE BREVET EUROPEEN**

(45) Date de publication et mention
de la délivrance du brevet:
**13.11.2013 Bulletin 2013/46**

(21) Numéro de dépôt: **11700036.4**

(22) Date de dépôt: **07.01.2011**

(51) Int Cl.:
***B64D 27/02*** *(2006.01)*　　***F02K 3/072*** *(2006.01)*
***F02C 3/067*** *(2006.01)*　　***F02C 7/36*** *(2006.01)*
***B64C 11/48*** *(2006.01)*

(86) Numéro de dépôt international:
**PCT/EP2011/050147**

(87) Numéro de publication internationale:
**WO 2011/083137 (14.07.2011 Gazette 2011/28)**

(54) **SYSTÈME D'HÉLICES CONTRAROTATIVES POUR TURBOMACHINE D'AÉRONEF**

GEGENROTIERENDES PROPELLERSYSTEM FÜR EINEN FLUGZEUGTURBINENMOTOR

CONTRA-ROTATING PROPELLER SYSTEM FOR AN AIRCRAFT TURBINE ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.01.2010 FR 1000074**

(43) Date de publication de la demande:
**14.11.2012 Bulletin 2012/46**

(73) Titulaire: **Snecma**
**75015 Paris (FR)**

(72) Inventeur: **BALK, Wouter**
**F-77000 Melun (FR)**

(74) Mandataire: **Milcent, Guillaume**
**Gevers France**
**81, boulevard Lazare Carnot**
**31000 Toulouse (FR)**

(56) Documents cités:
**FR-A1- 2 551 023　　FR-A1- 2 641 333**
**GB-A- 586 557　　GB-A- 2 150 980**
**GB-A- 2 209 371　　US-A- 4 817 382**

## Description

La présente invention concerne un système d'hélices contrarotatives pour une turbomachine d'aéronef.

L'invention s'applique aux turbomachines pour aéronef, par exemple du type turboréacteur ou turbopropulseur. Elle s'applique plus particulièrement aux turbomachines dites à « open rotor », au sein desquelles une turbine libre de puissance entraîne deux hélices contrarotatives, directement ou indirectement par l'intermédiaire d'un dispositif de transmission mécanique formant réducteur et comprenant notamment un train épicycloïdal. Dans ces systèmes d'hélices contrarotatives, les hélices sont donc dépourvues de carénage au niveau de leurs extrémités radiales externes.

On connaît des turbomachines à systèmes d'hélices contrarotatives, dont les hélices sont entraînées par un dispositif de transmission mécanique, prenant habituellement la forme d'un réducteur différentiel. Ce réducteur différentiel comporte un train épicycloïdal particulier, dont le planétaire est entraîné en rotation par un rotor d'une turbine libre de puissance, dont le porte-satellites entraîne la première hélice, et dont la couronne entraîne la deuxième hélice. A cet égard, il est noté qu'en fonction de la position des hélices contrarotatives par rapport à la turbine libre de puissance qui les entraîne, la première hélice constitue l'hélice aval et la deuxième hélice, l'hélice amont, ou inversement. Quoi qu'il en soit, à la différence d'un train épicycloïdal simple, la couronne n'est pas fixe, mais mobile.

Avec un tel train épicycloïdal, les deux hélices ne peuvent subir les mêmes couples aérodynamiques. Les équations d'équilibre mécaniques des satellites montrent que ces deux couples ont nécessairement un rapport constant, dépendant des caractéristiques géométriques du réducteur. Ce rapport est nécessairement différent du rapport unitaire. En effet, le rapport entre le couple C1 appliqué à la première hélice et le couple C2 appliqué à la deuxième hélice s'exprime de la manière suivante :

$$C1/C2 = (R + 1)/(R - 1) ;$$

avec R correspondant au rapport de réduction défini par le train épicycloïdal.

Ainsi, pour atteindre un rapport de couples proche de l'unité, il est nécessaire d'augmenter le rapport de réduction R, qui ne peut toutefois, pour des questions de faisabilité mécanique, être supérieur à 10. De plus, l'augmentation du rapport de réduction R se traduit inévitablement par une augmentation de la masse globale du réducteur, pénalisant la turbomachine.

Du fait du rapport non-unitaire entre les couples, l'une des deux hélices va générer plus de giration du flux secondaire que l'autre hélice, ce qui se traduit par une giration résiduelle du flux de sortie, limitant sensiblement le rendement de la propulsion et augmentant de façon néfaste le niveau acoustique de la turbomachine. Dans les faits, c'est la première hélice entraînée par le porte-satellites qui est toujours la plus chargée en termes de couple.

En outre, cette différence entre les deux couples génère également une sollicitation accrue des moyens servant à l'accrochage de la turbomachine sur l'aéronef, ces moyens devant par conséquent être surdimensionnés pour supporter la surcharge qui leur est appliquée.

On connaît par la demande de brevet français FR0858822 déposée le 19 décembre 2008 par la société SNECMA, un système d'hélices permettant de combler le déficit de couple reçu par la deuxième hélice, la deuxième hélice étant entraînée par le deuxième rotor de la turbine libre de puissance, via la couronne du train épicycloïdal. Il en résulte que le flux aérodynamique est bien redressé en sortie du système d'hélices. De plus, les moyens servant à l'accrochage de la turbomachine sur l'aéronef sont moins sollicités mécaniquement, et peuvent par conséquent adopter une conception moins coûteuse en termes d'encombrement et de masse.

Pour limiter le bruit de la turbomachine, le moteur doit comprendre un espace suffisant entre les hélices amont et aval ce qui augmente la longueur de la turbomachine. En outre, lorsqu'une hélice est équipée d'un système de calage variable de ses pales, l'alimentation en puissance (électrique ou hydraulique) du système de calage traverse le train épicycloïdal. Ainsi, toute panne du train épicycloïdal affecte le système de calage ce qui nécessite des prévisions spéciales pour éviter des situations dangereuses en vol.

Afin d'éliminer au moins certains de ces inconvénients, l'invention concerne un système d'hélices contrarotatives pour turbomachine d'aéronef, comprenant :

- une turbine libre de puissance comprenant un premier rotor et un deuxième rotor contrarotatif vis-à-vis dudit premier rotor;
- une première hélice et une deuxième hélice contrarotatives destinées à être mises en rotation autour d'un axe longitudinal du système d'hélices, par rapport à un stator de ce système ; et
- un dispositif de transmission mécanique comprenant un train épicycloïdal comprenant un planétaire centré sur ledit axe longitudinal et entraîné par ledit premier rotor de la turbine libre de puissance, des satellites engrenant avec ledit planétaire, un porte-satellites entraînant ladite première hélice, et une couronne engrenant avec chaque satellite, la couronne, entraînée par ledit deuxième rotor, entraînant ladite deuxième hélice.

Le système est caractérisé par le fait que le dispositif de transmission mécanique est disposé entre la première hélice et la seconde hélice. Ainsi, on peut réduire de manière significative les dimensions de la turbomachine. En outre, comme il est nécessaire de conserver un espace suffisant entre les hélices, on peut augmenter les dimensions du dispositif de transmission mécanique de manière à en limiter la complexité et donc le coût. On obtient ainsi une turbomachine de taille réduite et peu complexe.

Grâce à l'invention, la présence d'un train épicycloïdal permet de diviser par deux le nombre d'étages dans la turbine et de diminuer son rayon moyen, ce qui réduit considérablement la masse du système d'hélices.

De préférence, la première hélice est disposée en aval du dispositif de transmission mécanique, et la deuxième hélice est disposée en amont du dispositif de transmission mécanique. Grâce à cet agencement, la configuration du train épicycloïdal est optimisée, la turbomachine étant compacte.

De préférence encore, le premier rotor de la turbine libre de puissance est le rotor interne, et le deuxième rotor de la turbine libre de puissance est le rotor externe.

De préférence, la turbine libre de puissance correspond à la turbine basse pression d'un turbomoteur à double-corps.

De préférence toujours, le porte-satellites est solidaire de la première hélice, la couronne étant solidaire de la deuxième hélice et du deuxième rotor de la turbine libre de puissance.

De préférence, le porte-satellites est monté rotatif par rapport au stator via des roulements de porte-satellites et la couronne est montée rotative par rapport au stator via des roulements de couronne. Chacune des hélices est ainsi supportée directement par le stator ce qui limite l'apparition de balourds et de vibrations.

De préférence, chaque hélice comprend un mécanisme de variation de pas des pales de l'hélice, chaque mécanisme étant monté dans le stator et décalé axialement par rapport au dispositif de transmission mécanique. Le mécanisme de variation de pas est avantageusement monté dans le stator ce qui limite les vibrations et donc son usure. En outre, comme l'alimentation en puissance du mécanisme de variation de pas est distincte du dispositif de transmission mécanique, cela évite de compromettre l'alimentation en puissance du mécanisme de variation de pas en cas de panne du dispositif de transmission mécanique.

De préférence, le train épicycloïdal est monté dans un arbre de couronne solidaire de la couronne, l'arbre de couronne comprenant une gorge circulaire intérieure agencée pour récupérer l'huile de lubrification du train épicycloïdal sous l'effet des forces centrifuges. Ainsi, l'huile de lubrification est centrifugée dans l'arbre de couronne et récupérée dans la gorge circulaire ce qui facilite le retour d'huile dans le moteur en vue de son passage dans un échangeur air-huile.

De préférence encore, la gorge circulaire est ménagée en amont du train épicycloïdal. Le système de circulation d'huile ne traverse avantageusement pas le train épicycloïdal ce qui simplifie la conception d'un tel train.

De préférence toujours, des orifices de drainage sont ménagés dans la couronne de manière à acheminer l'huile de lubrification située en aval du train épicycloïdal vers la gorge circulaire.

L'invention concerne également une turbomachine pour aéronef comprenant un système d'hélices contrarotatives tel que présenté précédemment. De préférence, la turbomachine est un « open rotor ».

L'invention sera mieux comprise à l'aide du dessin annexé sur lequel :

- la figure 1 est une vue schématique d'un système d'hélices selon l'invention;
- la figure 2 est une vue en coupe longitudinale d'un système d'hélices pour aéronef, selon une forme de réalisation préférée de la présente invention ;
- la figure 3 est une vue agrandie du système d'hélices de la figure 2 ;
- la figure 4 est une vue agrandie du système d'hélices de la figure 3 ; et
- la figure 5 est une vue schématique en coupe transversale du train épicycloïdal du système d'hélices selon l'invention.

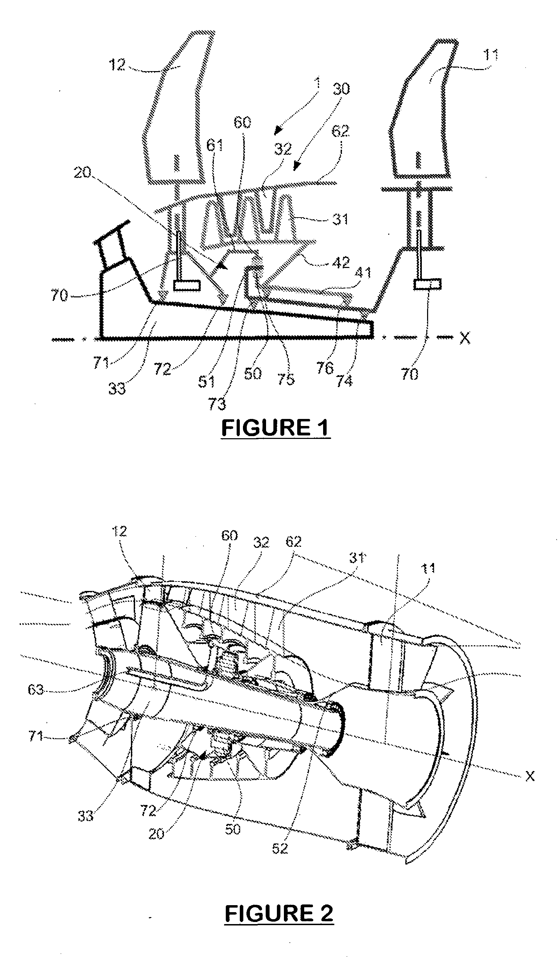

Une turbomachine comprend, de manière classique, de l'amont vers l'aval, un compresseur basse pression, un compresseur haute pression, une chambre de combustion, une turbine haute pression, et une turbine basse pression. Par la suite, les termes « amont » et « aval » sont définis par rapport à la circulation des gaz dans la turbomachine, les gaz circulant depuis l'amont vers l'aval. De même, par convention dans la présente demande, les termes « intérieur » et « extérieur » sont définis radialement par rapport à l'axe X du moteur représenté sur les figures 1 à 4. Ainsi, un cylindre s'étendant selon l'axe du moteur comporte une face intérieure tournée vers l'axe du moteur et une surface extérieure, opposée à sa surface intérieure.

Le compresseur basse pression et la turbine basse pression sont reliés mécaniquement par un arbre basse pression, formant ainsi un corps basse pression, tandis que le compresseur haute pression et la turbine haute pression sont reliés mécaniquement par un arbre haute pression, formant un corps haute pression. La turbomachine est dite à double corps.

En référence à la figure 1, un système 1 d'hélices contrarotatives pour turbomachine d'aéronef selon l'invention comprend une turbine libre de puissance 30 comprenant un premier rotor 31 et un deuxième rotor 32 contrarotatif vis-à-vis dudit premier rotor 31, une première hélice 11 et une deuxième hélice 12 contrarotatives destinées à être mises en rotation par rapport au carter 33 de la turbomachine autour de l'axe du système d'hélices, cet axe étant confondu avec l'axe X de la turbomachine.

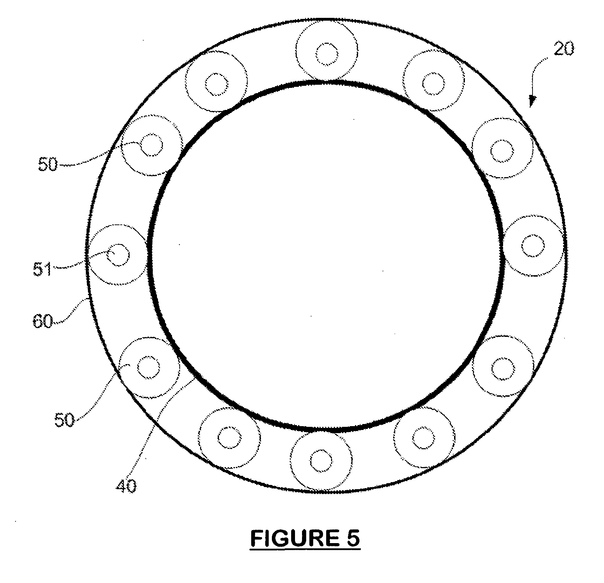

En référence à la figure 5, le système 1 comprend un dispositif de transmission mécanique se présentant sous la forme d'un train épicycloïdal 20, formant réducteur, comportant un planétaire 40 centré sur ledit axe longitudinal X et entraîné par ledit premier rotor 31 de la turbine libre de puissance, des satellites 50 engrenant avec ledit planétaire 40, un porte-satellites 51 entraînant ladite première hélice 11, ainsi qu'une couronne 60, entraînée par ledit deuxième rotor 32 engrenant avec chaque satellite 50 et entraînant ladite deuxième hélice 12, le dispositif de transmission mécanique étant disposé entre la première hélice 1 et la seconde hélice 12.

En référence à la figure 1, la première hélice 11 est montée en aval du train 20 épicycloïdal tandis que la deuxième hélice 12 est montée en amont. Ainsi, l'espace inter-hélice ménagé entre les hélices amont 12 et aval 11 est utilisé pour loger la turbine libre de puissance 30 de la turbomachine ce qui permet avantageusement de réduire la longueur de la turbomachine et donc, son encombrement.

Contrairement à la demande FR0858822 déposée le 19 décembre 2008 par la société SNECMA, dans lequel le système d'hélices contrarotatives se trouve en aval de la turbine basse pression, le système d'hélices 1 est ici intégré plus en amont dans la turbomachine.

En référence à la figure 1, la turbine basse pression 30, correspondant à la turbine libre de puissance, comprend un premier rotor 31, constituant le rotor interne de la turbine basse pression, et un deuxième rotor 32, constituant le rotor externe de cette turbine, le deuxième rotor 32 étant également connu sous la dénomination « tambour externe » par l'homme du métier. La turbine basse pression 30 est ici montée dans le stator 33 de la turbomachine, connu de l'homme du métier sous la désignation « carter d'échappement ». Le carter d'échappement 33 forme la partie statorique du système d'hélices selon l'invention et est centré sur l'axe X de la turbomachine. Le carter d'échappement 33 s'étend axialement et intérieurement à la turbine passe pression 30.

La première hélice 11, désignée hélice aval, et la deuxième hélice 12, désignée hélice amont, se présentent chacune sous la forme d'une roue comportant des pales radiales s'étendant vers l'extérieur. Dans cet exemple, le système d'hélices 1 est conçu de sorte que les hélices soient dépourvues de carénage radial extérieur les entourant, comme représenté sur les figures, la turbomachine étant « open rotor ».

En référence à la figure 2, les hélices 11, 12 sont décalées axialement l'une par rapport à l'autre, le train épicycloïdal 20 étant monté entre elles. Autrement dit, la turbomachine comprend axialement, de l'amont vers l'aval, l'hélice amont 12, le train épicycloïdal 20 et l'hélice aval 11. Les deux hélices 11, 12 sont agencées pour tourner dans des sens opposés autour de l'axe X de la turbomachine sur lequel elles sont centrées, les rotations s'effectuant par rapport au carter 33 qui demeure immobile. Les deux hélices 11, 12 sont entraînées par le train épicycloïdal 20.

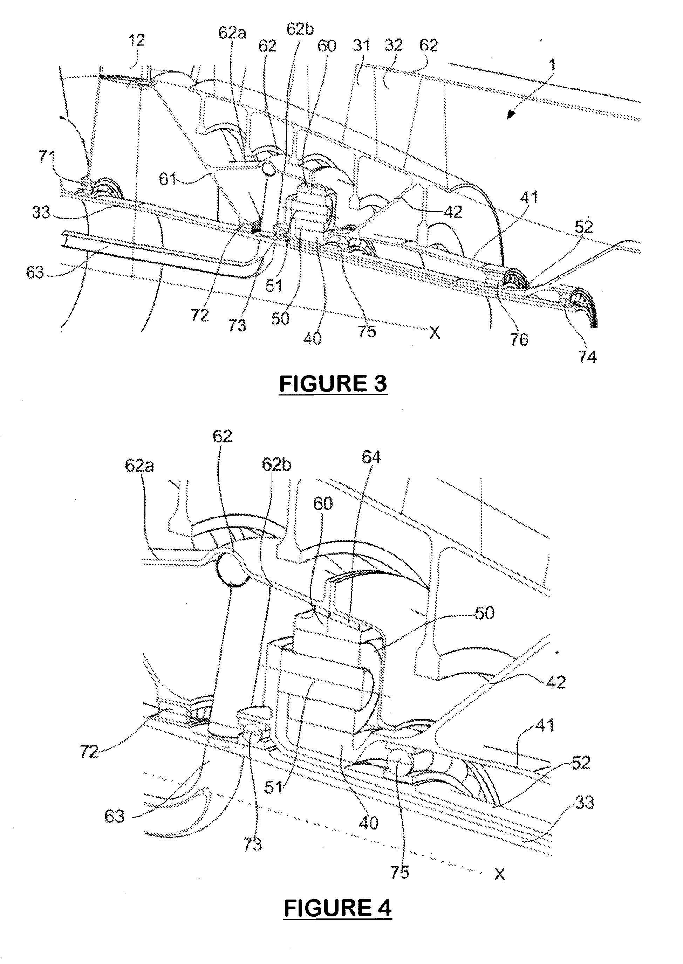

En référence à la figure 5, le planétaire 40 du train épicycloïdal 20 se présente sous la forme d'une roue dont la surface extérieure est dentée et qui est centrée sur l'axe X de la turbomachine. En référence aux figures 3 et 4, le planétaire 40 est relié en aval à un arbre planétaire longitudinal 41 s'étendant selon l'axe X de la turbomachine.

L'arbre planétaire 41 est solidaire en rotation du premier rotor 31 par le biais d'une bride tronconique 42. Lorsque des gaz issus de la chambre de combustion traversent la turbine basse pression de la turbomachine, le premier rotor 31 entraîne directement le planétaire 40 en rotation.

Toujours en référence à la figure 5, les satellites 50 du train épicycloïdal 20 se présentent sous la forme de roues dont la surface extérieure dentée engrène avec la surface extérieure dentée du planétaire 40. Chaque satellite 50 est porté par un arbre satellite 51 d'axe excentré par rapport à l'axe X de la turbomachine. Le train épicycloïdal 20 est équipé d'un porte-satellites 52, centré sur l'axe X de la turbomachine, portant de manière rotative les satellites 50 par l'intermédiaire de leurs arbres satellites 51. Le porte-satellites 52 se présente sous la forme d'un arbre longitudinal coaxial à l'arbre planétaire 41, l'arbre planétaire 41 étant monté rotatif extérieurement au porte-satellites 52 par l'intermédiaire de roulements 75, 76 qui sont désignés par la suite roulements planétaires 75, 76.

L'arbre planétaire 41 possède un diamètre relativement important afin de loger les roulements planétaires 75, 76 et le porte-satellites 52. Il est ainsi possible de prévoir un plus grand nombre de satellites 50 (ici douze), de taille réduite, entre le planétaire 40 et la couronne 60 comme représenté sur la figure 5. Le train épicycloïdal 20 ainsi obtenu possède un rapport de réduction plus faible pour des dimensions globales réduites et une masse inférieure en comparaison à un train épicycloïdal selon l'art antérieur.

Pour un moteur selon l'art antérieur, un rapport de réduction faible (de l'ordre de 4) provoquerait un déséquilibre entre le couple sur l'hélice amont et le couple sur l'hélice aval. Selon l'invention, ce déficit de couple est avantageusement compensé par le deuxième rotor comme cela sera détaillé par la suite.

Le porte-satellites 52 est solidaire, en aval du train épicycloïdal 20, de la première hélice 11, comme représenté sur les figues 1 et 2, de manière à l'entraîner directement en rotation. En référence à la figure 3, le porte-satellites 52 est supporté par des roulements de porte-satellites 73, 74 par rapport au carter 33 de la turbomachine. Comme l'hélice aval 11 est supportée directement par rapport au carter 33, cela limite l'apparition de balourds et de vibrations pouvant être ressenties par des voyageurs de l'aéronef sur lequel est montée la turbomachine.

Toujours en référence à la figure 5, la couronne 60 du train épicycloïdal 20 se présente sous la forme d'un cylindre axial comprenant des dents saillantes radialement vers l'intérieur de la turbomachine. La couronne 60 est centrée sur l'axe X de la turbomachine et est portée par un arbre de couronne 61 de même axe, la couronne 60 engrenant intérieurement avec les satellites 50 comme représenté sur la figure 5.

L'arbre de couronne 61 s'étend vers l'amont depuis le train épicycloïdal 20 et est solidaire de la deuxième hélice 12, de manière à l'entraîner directement en rotation. En référence à la figure 4, l'arbre de couronne 61 s'étend en amont du train épicycloïdal 20 tandis que l'arbre de porte-satellites 52 s'étend en aval du train épicycloïdal 20. Ainsi, les hélices aval 11 et amont 12 sont de part et d'autre du train épicycloïdal 20. L'arbre de couronne 61 est monté rotatif extérieurement au carter 33 de la turbomachine par l'intermédiaire de roulements de couronne 71, 72.

L'arbre de couronne 61 est solidaire du deuxième rotor 32, par le biais d'une bride. Ainsi, une partie de la puissance est transmise directement du deuxième rotor 32 à l'hélice amont 12 sans passer par le train épicycloïdal 20.

Ainsi, le deuxième rotor 32 participe directement à l'entraînement de la couronne 31, et donc à l'entraînement de l'hélice amont 12. Cela permet d'obtenir un rapport unitaire entre les couples transmis respectivement à l'hélice aval 11 et à l'hélice amont 12, pour l'obtention d'un meilleur rendement de la turbomachine.

En référence à la figure 1, chaque hélice est équipée d'un mécanisme de variation de pas de ses pales. Chaque système est de préférence logé dans une cavité ménagée en dessous de chaque hélice. L'alimentation en puissance de chaque mécanisme (électrique ou hydraulique) se fait à travers une protubérance saillant vers l'aval du carter d'échappement 33. Le train épicycloïdal 20 est décalé axialement par rapport aux mécanismes 70 de variation de pas des hélices 11, 12. Ainsi, en cas de panne du train épicycloïdal 20 ou de surchauffe de ce dernier, il n'y a pas de conséquences néfastes pour les mécanismes de variation de pas des hélices.

Etant donné la puissance importante transmise par le réducteur, il est nécessaire d'évacuer une quantité importante de chaleur dudit réducteur. A cet effet, un circuit de lubrification permet de refroidir le réducteur, son débit d'huile étant d'environ 5000 litres par heure.

Suite au déplacement du réducteur en amont du moteur, il est nécessaire de modifier le circuit de lubrification du réducteur. Dans l'art antérieur, le circuit de lubrification devrait traverser le porte-satellites du réducteur ce qui présentait un inconvénient.

En référence aux figures 3 et 4, le réducteur est logé dans l'arbre de couronne rotatif 61 qui est baigné d'huile de lubrification. L'huile de lubrification du réducteur est alors entraînée, sous l'effet des forces centrifuges, contre la surface intérieure de l'arbre de couronne 61. On dit que l'huile est « centrifugée ».

Afin de faciliter la récupération de l'huile de lubrification, il est prévu une gorge de récupération circulaire 62 dans l'arbre de couronne 61, s'étendant transversalement à l'axe du moteur, ménagée en amont du train épicycloïdal 20 dans la surface intérieure de l'arbre de couronne 61, la gorge 62 possédant une ouverture radiale orientée vers l'intérieur.

Pour permettre à l'huile de lubrification située en aval du réducteur d'atteindre la gorge de récupération 62, des orifices de drainage 64 sont ménagés dans la couronne 60. En référence plus particulièrement à la figure 4, les orifices de drainages 64 s'étendent dans la couronne 60 et débouchent de part en part de cette dernière de manière à mettre en communication le volume de l'arbre de couronne 61 situé en aval du réducteur avec son volume situé en amont. Les orifices de drainage 64 s'étendent ici obliquement, de l'amont vers l'aval, vers l'intérieur du moteur, de manière à faciliter la circulation de l'huile de lubrification vers le volume amont sous l'effet des forces centrifuges.

Afin de faciliter la récupération de l'huile de lubrification, la gorge circulaire 62 est ménagée dans une cuvette annulaire de l'arbre de couronne 61 définissant une pente oblique amont 62a s'étendant vers l'extérieur, de l'amont vers l'aval, et une pente oblique aval 26b s'étendant vers l'intérieur, de l'amont vers l'aval. Ainsi, l'huile de lubrification est guidée par les pentes obliques 62a, 62b pour être récupérée dans la gorge circulaire 62. Le retour d'huile est assuré par une pluralité de tubes 63 qui, d'amont en aval, s'étendent longitudinalement dans le carter d'échappement 33, le traversent radialement au droit de la gorge circulaire 62 pour déboucher dans ladite gorge circulaire 62. L'extrémité des tubes 63 est ici ouverte et orientée tangentiellement, c'est-à-dire perpendiculairement à la direction radiale, de manière à ce que l'huile de lubrification récupérée dans la gorge circulaire 62 soit entraînée dans les tubes 63 au cours de la rotation de l'arbre de couronne 61. Les tubes 63, ici au nombre de trois, permettent d'écoper l'huile de lubrification dans la gorge circulaire 62.

Après récupération, l'huile de lubrification est acheminée en amont du moteur par les tubes 63 vers un échangeur air-huile qui est, de préférence, monté dans un boîtier d'équipements accessoires du moteur. De manière avantageuse, comme une partie de la puissance (environ 20%) est transmise directement du deuxième rotor 32 à l'hélice amont 12 sans passer par le train épicycloïdal 20, la chaleur générée à l'intérieur du réducteur est ainsi plus faible par comparaison à un moteur selon l'art antérieur. Cela permet avantageusement de réduire le débit d'huile pour le refroidissement du train épicycloïdal 20 et, par voie de conséquence, de limiter les dimensions de l'échangeur air-huile et donc sa traînée.

## Revendications

1. Système (1) d'hélices contrarotatives pour turbomachine d'aéronef, comprenant :

   - une turbine libre de puissance (30) comprenant un premier rotor (31) et un deuxième rotor (32) contrarotatif vis-à-vis dudit premier rotor (31);

- une première hélice (11) et une deuxième hélice (12) contrarotatives destinées à être mises en rotation autour d'un axe longitudinal (X) du système d'hélices (1), par rapport à un stator (33) de ce système ; et
- un dispositif de transmission mécanique comprenant un train épicycloïdal (20) comprenant :

    i. un planétaire (40) centré sur ledit axe longitudinal (X) et entraîné par ledit premier rotor (31) de la turbine libre de puissance (30),
    ii. des satellites (50) engrenant avec ledit planétaire (40),
    iii. un porte-satellites (51) entraînant ladite première hélice (11), et
    iv. une couronne (60) engrenant avec chaque satellite (50), la couronne (60), entraînée par ledit deuxième rotor (32), entraînant ladite deuxième hélice (12),

système **caractérisé par le fait que** le dispositif de transmission mécanique est disposé entre la première hélice (11) et la seconde hélice (12).

2. Système selon la revendication 1, dans lequel la première hélice (11) est disposée en aval du dispositif de transmission mécanique, et la deuxième hélice (12) est disposée en amont du dispositif de transmission mécanique.

3. Système selon l'une des revendications 1 à 2, dans lequel le premier rotor (31) de la turbine libre de puissance (30) est le rotor interne, et le deuxième rotor (32) de la turbine libre de puissance (30) est le rotor externe.

4. Système selon l'une des revendications précédentes, dans lequel le porte-satellites (52) est solidaire de ladite première hélice (11), et en ce que ladite couronne (60) est solidaire de ladite deuxième hélice (12) et dudit deuxième rotor (32) de la turbine libre de puissance.

5. Système selon l'une des revendications précédentes, dans lequel le porte-satellites (52) est monté rotatif par rapport au stator (33) via des roulements de porte-satellites (73, 74) et la couronne (60) est montée rotative par rapport au stator (33) via des roulements de couronne (71, 72).

6. Système selon l'une des revendications précédentes, dans lequel le train épicycloïdal (20) est monté dans un arbre de couronne (61) solidaire de la couronne (60), l'arbre de couronne (61) comprenant une gorge circulaire intérieure (62) agencée pour récupérer l'huile de lubrification du train épicycloïdal (20) sous l'effet des forces centrifuges.

7. Système selon la revendication 6, dans lequel la gorge circulaire (62) est ménagée en amont du train épicycloïdal (20).

8. Système selon la revendication 7, dans lequel des orifices de drainage (64) sont ménagés dans la couronne (60) de manière à acheminer l'huile de lubrification située en aval du train épicycloïdal (20) vers la gorge circulaire (62).

9. Turbomachine pour aéronef comprenant un système d'hélices contrarotatives (1) selon l'une quelconque des revendications précédentes.

10. Turbomachine selon la revendication 9, **caractérisée en ce qu'**elle est un « open rotor ».

**Patentansprüche**

1. System (1) aus gegenläufig drehenden Propellern für Flugzeug-Turbomaschine, Folgendes umfassend:

    - eine leistungsfreie Turbine (30), die einen ersten Rotor (31) und einen zweiten Rotor (32), der gegenüber dem ersten Rotor (31) gegenläufig drehend ist, umfasst;
    - einen ersten Propeller (11) und einen zweiten Propeller (12), die gegenläufig drehend sind und dazu bestimmt sind, um eine Längsachse (X) des Propeller-Systems (1) relativ zu einem Stator (33) dieses Systems in Drehung versetzt zu werden; und
    - eine mechanische Getriebevorrichtung, die ein Umlaufrädergetriebe (20) umfasst, Folgendes umfassend:

        i. ein Sonnenrad (40), das auf der Längsachse (X) zentriert ist und durch den ersten Rotor (31) der leistungsfreien Turbine (30) angetrieben wird,
        ii. Planetenräder (50), die mit dem Sonnenrad (40) in Eingriff sind,
        iii. einen Planetenradträger (51), der den ersten Propeller (11) antreibt, und
        iv. ein Hohlrad (60), das mit jedem Planetenrad (50) in Eingriff ist, wobei das Hohlrad (60), das durch den zweiten Rotor (32) angetrieben wird, den zweiten Propeller (12) antreibt,

wobei das System **dadurch gekennzeichnet ist, dass** die mechanische Getriebevorrichtung zwischen dem ersten Propeller (11) und dem zweiten Propeller (12) angeordnet ist.

2. System nach Anspruch 1, wobei der erste Propeller (11) hinter der mechanischen Getriebevorrichtung angeordnet ist und der zweite Propeller (12) vor der mechanischen Getriebevorrichtung angeordnet ist.

3. System nach Anspruch 1 bis 2, wobei der erste Rotor (31) der leistungsfreien Turbine (30) der innen liegende Rotor ist und der zweite Rotor (32) der leistungsfreien Turbine (30) der außen liegende Rotor ist.

4. System nach einem der vorhergehenden Ansprüche, wobei der Planetenradträger (52) mit dem ersten Propeller (11) fest verbunden ist und wobei das Hohlrad (60) mit dem zweiten Propeller (12) und dem zweiten Rotor (32) der leistungsfreien Turbine fest verbunden ist.

5. System nach einem der vorhergehenden Ansprüche, wobei der Planetenradträger (52) relativ zu dem Stator (33) über Planetenradträgerlager (73, 74) drehbar gelagert ist und das Hohlrad (60) relativ zu dem Stator (33) über Hohlradlager (71, 72) drehbar gelagert ist.

6. System nach einem der vorhergehenden Ansprüche, wobei das Umlaufrädergetriebe (20) in einer Hohlradwelle (61) gelagert ist, die mit dem Hohlrad (60) fest verbunden ist, wobei die Hohlradwelle (61) eine innere kreisförmige Rille (62) umfasst, die zum Auffangen des Schmieröls des Umlaufrädergetriebes (20) unter Einwirkung der Zentrifugalkräfte eingerichtet ist.

7. System nach Anspruch 6, wobei die kreisförmige Rille (62) vor dem Umlaufrädergetriebe (20) vorgesehen ist.

8. System nach Anspruch 7, wobei Ableitungsöffnungen (64) in dem Hohlrad (60) vorgesehen sind, derart, dass das Schmieröl, das hinter dem Umlaufrädergetriebe (20) befindlich ist, zu der kreisförmigen Rille (62) hin geleitet wird.

9. Turbomaschine für Flugzeug, die ein System aus gegenläufig drehenden Propellern (1) nach einem der vorhergehenden Ansprüche umfasst.

10. Turbomaschine nach Anspruch 9, **dadurch gekennzeichnet, dass** sie ein "open rotor" ist.

## Claims

1. A contra-rotating propeller system (1) for an aircraft turbine engine, including:

   - a free power turbine (30) including a first rotor (31) and a second contra-rotating rotor (32) relative to said first rotor (31);
   - a first (11) and a second (12) contra-rotating propellers to be rotated about a longitudinal axis (X) of the propeller system (1) relative to a stator (33) of this system, and
   - a mechanical transmission device including a planetary gear train (20) including:

   i. a sun gear (40) concentric with said longitudinal axis (X) and driven by said first rotor (31) of the free power turbine (30),
   ii. planet gears (50) meshing with said sun gear (40),
   iii. a planet carrier (51) driving said first propeller (11), and
   iv. a ring gear (60) meshing with each planet gear (50), the ring gear (60), driven by said second rotor (32), driving said second propeller (12),

the system is **characterized in that** the mechanical transmission device is arranged between the first propeller (11) and the second propeller (12).

2. A system according to claim 1, wherein the first propeller (11) is arranged downstream to the mechanical transmission device and the second propeller (12) is arranged upstream to the mechanical transmission device.

3. A system according to one of claims 1 and 2, wherein the first rotor (31) of the free power turbine (30) is the internal rotor, and the second rotor (32) of the free power turbine (30) is the external rotor.

4. A system according to one of the previous claims, wherein the planet carrier (52) is integral with said first propeller (11), and in that said ring gear (60) is integral with said second propeller (12) and said second rotor (32) of the free power turbine.

5. A system according to one of the previous claims, wherein the planet carrier (52) is rotatably mounted with regard to the stator (33) via planet carrier bearings (73, 74) and the ring gear (60) is rotatably mounted with regard to the stator (33) via ring gear bearings (71, 72).

6. A system according to one of the previous claims, wherein the planetary gear train (20) is mounted in a ring gear shaft (61) integral with the ring gear (60), the ring gear shaft (61) including an internal circular groove (62) arranged to get back the lube oil from the planetary gear train (20) under the influence of the centrifugal forces.

7. A system according to claim 6, wherein the circular groove (62) is arranged upstream to the planetary gear train (20).

8.  A system according to claim 7, wherein drain ports (64) are arranged in the ring gear (60) so as to forward the lube oil located downstream to the planetary gear train (20) towards the circular groove (62).

9.  A turbine engine for an aircraft including a contrarotating propeller system (1) according to any previous claims.

10. A turbine engine according to claim 9, **characterized in that** it is an « open rotor » one.

**FIGURE 1**

**FIGURE 2**

**FIGURE 3**

**FIGURE 4**

**FIGURE 5**

**EP 2 521 851 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 0858822